(19)

Europäisches
Patentamt
European
Patent Office
Office européen
des brevets

(11) **EP 3 351 965 A1**

(12) **EUROPEAN PATENT APPLICATION**

(43) Date of publication:
25.07.2018 Bulletin 2018/30

(51) Int Cl.:
*G01S 17/93* (2006.01)　　*G01S 7/48* (2006.01)
*G01S 17/89* (2006.01)　　*G01S 7/51* (2006.01)

(21) Application number: 17201247.8

(22) Date of filing: 13.11.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.01.2017 US 201715409820**

(71) Applicant: **Honeywell International Inc.
Morris Plains, NJ 07950 (US)**

(72) Inventor: **MCKITTERICK, John B.
Morris Plains, NJ 07950 (US)**

(74) Representative: **Houghton, Mark Phillip
Patent Outsourcing Limited
1 King Street
Bakewell, Derbyshire DE45 1DZ (GB)**

(54) **A QUALITY METRIC FOR RANGING SENSOR IN A DEGRADED VISUAL ENVIRONMENT FOR A SITUATIONAL AWARENESS SYSTEM**

(57)　　A method of updating a probabilistic evidence grid used for navigation is provided. The method includes sensing a plurality of defined physical cells with at least one sensor at least one time to gather sensor data regarding the content of the defined physical cells. Each physical cell is associated with an evidence cell in a probabilistic evidence grid that is made up of a plurality of evidence cells. Moreover, each evidence cell in the probabilistic evidence grid contains a probability of occupancy value. It is determined if the gathered sensor data is valid. Probability of occupancy values of evidence cells of the probabilistic evidence grid with associated valid determinations of sensor data are updated. The updated evidence cell probability of occupancy values are then used in a situational awareness system.

FIG. 3

**Description**

STATEMENT REGARDING FEDERALLY SPONSORED

RESEARCH OR DEVELOPMENT

The United States Government may have certain rights to the contents of this application based on U.S. Army Contract No. W909MY-12-D-0008/0019 MTEQ, Subcontract WHII-001, Purchase Order 21738.

BACKGROUND

It can be a challenge to maneuver a vehicle, such as a helicopter, in a degraded visual environment (DVE). In a DVE sensors may be used to measure the area surrounding the vehicle. Information from the sensors may be used to build a 3D map which is in turn presented to the operator of the vehicle in a mounted or helmet display so the operator can safely traverse through the DVE. However, sensors that provide object location awareness information can be occluded by such things as dust, snow, debris etc. which can cause the sensors to provide invalid information.
For the reasons stated above and for other reasons stated below which will become apparent to those skilled in the art upon reading and understanding the present specification, there is a need in the art for a method of rejecting invalid information from sensors in a DVE.

SUMMARY OF INVENTION

The above-mentioned problems of current systems are addressed by embodiments of the present invention and will be understood by reading and studying the following specification. The following summary is made by way of example and not by way of limitation. It is merely provided to aid the reader in understanding some of the aspects of the invention. Embodiments provide methods and systems of validating sensor data before the sensor data is used to update a probabilistic evidence grid that may be used in situational awareness systems such, but not limited to, a synthetic vision system.
In one embodiment, a method of updating a probabilistic evidence grid used in a situational awareness system is provided. The method includes sensing a plurality of defined physical cells with at least one sensor at least one time to gather sensor data regarding the content of the defined physical cells. Each physical cell is associated with an evidence cell in a probabilistic evidence grid that is made up of a plurality of evidence cells. Moreover, each evidence cell in the probabilistic evidence grid contains a probability of occupancy value. It is determined if the gathered sensor data is valid. Probability of occupancy values of evidence cells of the probabilistic evidence grid with associated valid determinations of sensor data are updated. The updated evidence cell probability of occupancy values are then used in a situational awareness system.
In another embodiment, yet another method of updating a probabilistic evidence grid used in a situational awareness system is provided. The method comprises sensing a plurality of defined physical cells with at least one sensor at least one time to gather sensor data regarding the content of the defined physical cells. Each physical cell is associated with an evidence cell in a probabilistic evidence grid that is made up of a plurality of evidence cells. Each evidence cell in the probabilistic evidence grid contains a probability of occupancy value. Probabilities of detection values associated with the gathered sensor data relating to at least one measurement across a set of physical cells is reviewed. Gathered sensor data relating to a select physical cell is determined to be valid based on the review of the probabilities of detection values associated with the gathered sensor data relating to at least one measurement across a set of physical cells. The probability of occupancy value of an associated evidence cell of the probabilistic evidence grid is updated when the gathered sensor data relating to the select physical cell is determined valid. The updated evidence cell probability of occupancy values are used in a situational awareness system.
In another embodiment, a situational awareness system for use in a degraded visual environment is provided. The situational awareness system includes at least one sensor configured to sense ranging information, at least one memory, a situational awareness system and at least one controller. The at least one memory is configured to store gathered sensor data from the at least one senor. The at least one memory is further configured to store a probabilistic evidence grid that includes a plurality of evidence cells that contain probability of occupancy values. The situational awareness system is configured to provide navigation information for operation of a vehicle based at least in part on the probabilistic evidence grid. The at least one controller is in communication with the at least one sensor, the at least one memory and the situational awareness system. Based at least in part on operating instructions stored in the at least one memory, the at least one controller is configured to associate physical cells being sensed with the at least one sensor with corresponding evidence cells in the probabilistic evidence grid. The at least one controller is further configured to determine if gathered sensor data is valid based at least in part on a comparison of probability of detection values from the sensor data associated with the physical cells and a probability of occupancy of a corresponding evidence cells in the probabilistic evidence grid stored in the at least one memory and a review of probability of detection values of a set of physical cells. Further the at least one controller is configured to update the corresponding evidence cell of the probabilistic evidence grid when the sensor data associated with the physical cells is determined valid.

BRIEF DESCRIPTION OF THE DRAWINGS

The present invention can be more easily understood and further advantages and uses thereof will be more readily apparent, when considered in view of the detailed description and the following figures in which:

Figure 1 is a block diagram of a control system of an embodiment;

Figure 2 is an illustration of a vehicle and grid volumes of an embodiment;

Figure 3 is a navigation information generation method of an embodiment illustrated in a flow diagram format; and

Figure 4 illustrates further steps involved with block 310 of Figure 3 in an embodiment.

In accordance with common practice, the various described features are not drawn to scale but are drawn to emphasize specific features relevant to the present invention. Reference characters denote like elements throughout Figures and text.

DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments of the present invention provide a method of validating sensor data coming from a ranging sensor, and the like, and then using the valid sensor data in a situational awareness system such as, but not limited to, a system that maps a scene. Embodiments exclude sensor data that is deemed unreliable using a Baysian approach. As discussed above, when a vehicle, such as a helicopter, operates in a degraded visual environment (DVE), such as brownout, whiteout, etc. some sensors that provide information about the area around the aircraft can become occluded. Light Detection and Ranging (LIDAR) sensors are a prime example of this, as LIDAR pulses may reflect off dust particles, rain, snow etc. in the air rather than the ground or objects on the ground. At that point, the LIDAR system becomes useless in providing the helicopter pilot with any information about the nature of a travel zone or desired landing zone, or worse than useless, by providing the pilot with false information.

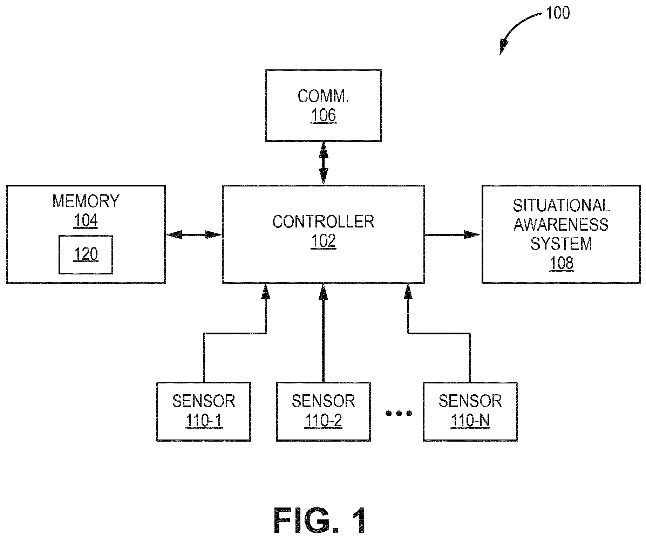

An example of a control system 100 of a vehicle implementing embodiments of a quality metric for ranging sensor in a degraded visual environment is illustrated in Figure 1. The control system 100 in this example embodiment includes a controller 102 with one on more processors and at least one memory 104 to store, among other information, operating instructions, a priori data, sensing data and a probabilistic evidence grid 120. In general, the controller 102 may include any one or more of a processor, microprocessor, a digital signal processor (DSP), an application specific integrated circuit (ASIC), a field program gate array (FPGA), or equivalent discrete or integrated logic circuitry. In some example embodiments, controller 102 may include multiple components, such as any combination of one or more microprocessors, one or more controllers, one or more DSPs, one or more ASICs, one or more FPGAs, as well as other discrete or integrated logic circuitry. The functions attributed to the controller 102 herein may be embodied as software, firmware, hardware or any combination thereof. The controller 102 may be part of a system controller or a component controller. The memory 104 may include computer-readable operating instructions that, when executed by the controller 102 provides functions of the quality metric for ranging sensor in a degraded visual environment. The computer readable instructions may be encoded within the memory 104. Memory 104 may comprise computer readable storage media including any volatile, nonvolatile, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

The control system 100 in the example embodiment of Figure 1, further includes a communication system 106 for external communications. The communication system 106 can be used for receiving a priori information such as map information. Also included in the example control system 100 is a situational awareness system 108 and sensors 110-1 through 110-N. The situational awareness system 108 in an embodiment may include a display used to provide visual aid to the operator for navigating of a vehicle. The sensors, include ranging sensors such as, but not limited to, LIDAR sensors.

In an example helicopter embodiment, in order to provide a pilot with a useful synthetic vision image through the situational awareness system 108, of a landing area or other area of desired travel, the system combines disparate sensor information with a priori information to create a scene that is presented to the pilot. A priori information or data, may include digital terrain elevation data maps, buckeye (LIDAR) survey maps, etc.

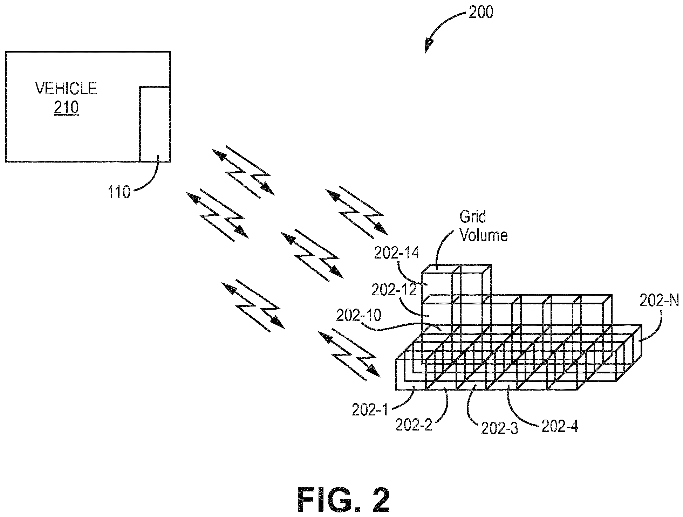

As discussed above, sensor information from sensors 110-1 through 110-N are used with a priori information to create a three-dimensional virtual map that is presented to the pilot. Embodiments use a probabilistic evidence grid 120 that is used at least in part to create the three-dimensional map. A probability evidence grid 120 is made up of a plurality of evidence cells containing probability values, generally referred herein as probability of occupancy values that are stored in the memory 104. Each evidence cell is associated with a three dimensional grid volume that is sensed by the sensors 110-1 through 110-N. The grid volume is herein generally referred to as a physical cell. Each probability of occupancy value of an evidence cell in the probabilistic evidence grid 120 represents a probability of occupancy in an associated small physical cell 202-1 through 202-N in a physical location such as a landing zone as illustrated in Figure 2. Figure 2, illustrates physical cells 202-1 through 202-N that make up a partial area of interest 200 being sensed by sensors (generally designated as 110) of vehicle 210. As stated above, associated with each physical cell is an evidence cell in the probabilistic evidence grid that includes a probability of occupancy value. An occupied value in an evidence cell means that there is something in the associated physical cell (generally designated as 202) that could harm the vehicle, such as a helicopter, if the helicopter traversed to the location of the physical cell 202. For each physical cell, sensor data sensing the content of the physical cell is collected and evaluated. This is generally illustrated in Figure 2, where a vehicle 210 with at least one sensor 212 is used to gather information on the physical cells 202-1 through 202-N.

Embodiments determine a probability of occupancy of each physical cell 202 based on gathered sensor data and a priori data stored in its associated evidence cell. The process starts by using the a priori data to determine an initial probability of occupancy for the evidence cells of the probabilistic evidence grid 120. For example, if physical cell 202-10 represents a volume that corresponds to the top of the ground in a location without structures it may have an initial assigned probability of occupancy of something like .6 in its corresponding evidence cell in the probabilistic evidence grid 120 while physical cells 202-12 and 202-14 that represent volumes farther away from the ground would have diminishing probabilities of occupancy. Sensor data relating to the physical cell 202 may then be used to update its probability of occupancy for its corresponding evidence cell in the evidence grid 120 when the sensor data indicates a change in probability. The evidence grid 120 is then used to update the three-dimensional virtual map that is presented to the pilot in an embodiment. For example, suppose the a priori data in an evidence cell indicates a low probability of occupancy, such as a value of .001 percent, but gathered sensor data in an associated physical cell 202 indicates 39 object detections. If these detections are presumed valid, the probability of occupancy of the evidence cell in the evidence grid 120 needs to be updated accordingly. For example, we may start with the .001 probability of occupancy but after the updates based on the sensor data the probability of occupancy of the evidence cell may be updated to something like .53 based on how many times an object was sensed in the physical cell 202 by the sensor 110 vs how many times the signal of the sensor 110 passed through the physical cell 202 without seeing anything. Hence, embodiments update the probability of occupancy of evidence cells based on the sensor returns from associated physical cells 202.

One method of updating the probability of occupancy is with a Bayesian approach. With the Bayesian approach updating the occupancies of evidence cells is based on previously assumed or calculated values (initial values based on a priori data) of a respective evidence cell. This update can be written simply as:

$$P(\theta_i | \{M\}) = \frac{P(\{M\} | \theta_i = 1)\theta_i}{P(\{M\} | \theta_i = 1)\theta_i + P(\{M\} | \theta_i = 0)(1 - \theta_i)}$$

This formula allows for updating the probability of occupancy of an evidence cell ($\theta_i$) based on the values of the probability of occupancy of the evidence cell and a set of measurements {M} from the sensor data of the corresponding physical cell 202. The key here is that we need to calculate the probability that we get the set of measurements, given the probabilities associated with the evidence cells. In order to do that, a model is used to calculate the probability of a detection, such as the probability of a reflection from a single physical cell. The probability of a reflection from a single physical cell may be written as:

$$1 - [(1 - p_{10})(1 - \theta_i) + p_{01}\theta_i]$$

Where $p_{10}$ is the probability that measurement of an empty physical cell results in a detection (the probability of a false detection) and $p_{01}$ is the probability that a measurement of an occupied physical cell results in no detection (the probability of a missed detection). Further in this equation, $\theta_1$ is the probability that the $i$th physical cell is occupied.

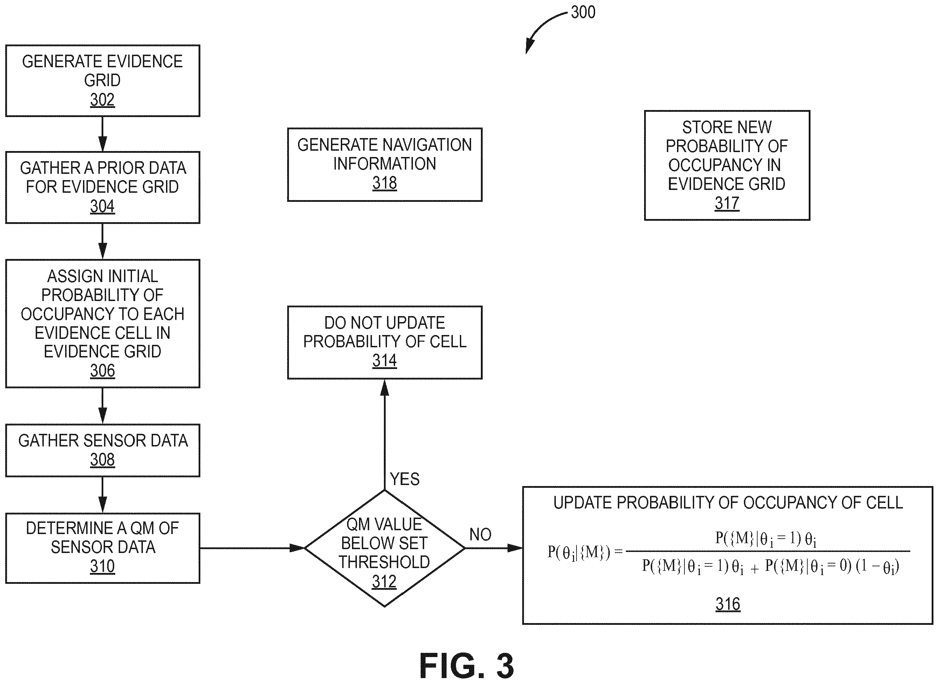

Embodiments of the present invention first determine if sensor data is valid before updating the probability of occupancy of an evidence cell. Figure 3 illustrates a navigation information generation method 300 of one embodiment used to further describe aspects discussed above. Method 300 is illustrated as a set of operations shown in discrete blocks. The method 300 may be implemented in any suitable hardware, software, firmware, or combination thereof as discussed above. As such the method 300 may be implemented in computer-executable instructions that can be stored on a computer-readable medium and/or transferred from one computer, such as a server, to a second computer of other electronic device via communication medium. The order in which the operation are described is not to be necessarily construed as a limitation.

The process starts by generating an evidence grid 120 in memory (block 302). A priori data is collected that relates to the physical locations associated to each evidence cell represented in the evidence grid (block 304). The a priori data may be uploaded to the vehicle 210 prior to an operational mission of the vehicle or may be communicated to the vehicle 210 via communication system 106 during a mission. Each evidence cell in the evidence grid 120 is assigned an initial probability of occupancy based on the priori data (block 306). This can occur when the evidence grid 120 is created before the operational mission or during the operational mission.

As discussed above, sensor data is used to update the initial probability of occupancy values in embodiments. Method 300 gathers sensor data as the vehicle 210 traverses through its operational mission (block 308). As the sensors 110 generate sensor data, sensor data is associated with physical cells the sensors 110 are sensing. In one embodiment this data-location identification of sensor data is done at least in part with the help of a location detection system such as, but not limited to, a global positioning satellites (GPS) system.

If sensor data relating to a physical cell indicates there is high probability of occupancy, however, an associated evidence cell in the evidence grid 120 indicates a low probability of occupancy, the probability of occupancy of the evidence cell may be adjusted as discussed above using the Bayesian approach. This may be the correct thing to do because this may be a situation where an object such as a car, that wasn't in that location (within the physical cell) at a prior time, is there now as sensed be the sensors 110. However, this may also be a situation where we have a brown out, white out etc. where the conditions are causing the sensors to provide faulty data. In this situation, the sensor data should not be used to change the probability of occupancy. Conditions such as brown out, white out, etc. occur over a relatively large area. Hence, many grid volumes (physical cells) will be affected with false sensor data. This is not the case for the car example, where only a few physical cells will be affected. Embodiments take advantage of this in determining if probabilities of detection from sensor data is valid and hence should be used or invalid and should not be used. Hence, in embodiments, a set of physical cells near a physical cell in question is chosen that is large enough to provide a statistical value. The set of physical cells is chosen to be big enough so that a car coming into the area will not have a big enough impact to cause the sensor data to be thrown out. Embodiments, compare probability of detection values of sensor data across many near located physical cells with probability of occupation values of associated evidence cells in the evidence grid 120 in determining if sensor data is valid. That is, in embodiments, it is determined if the probability of detection value associated with gathered sensor data for a defined physical cell is what is expected in light of a cell probability of occupancy value of an associate evidence cell. If not, a sensor data for a set of near physical cell is looked at to make a valid determination.

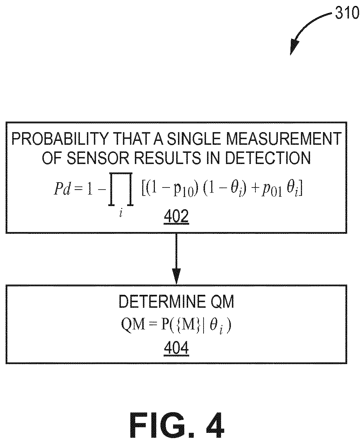

In one embodiment, a quality measurement (QM) is determined based on probabilities of measurements of the set of physical cells in determining if the sensor data associated with a physical cell near the set of physical cells is valid (block 310). The QM is then compared against a threshold as further described below. The determination of the QM (block 310) in an embodiment is illustrated further in blocks 402 and 440 of Figure 4. At block 402 a probability $Pd$ that a single measurement over a set of physical cells results in a detection. This takes into consideration that, the sensors measures a collection of the physical cells (rather than a single cell) because radar beams, for example, are typically wide and so include multiple physical cells in one range bin. An equation for the probability $Pd$ is as follows:

$$Pd = 1 - \prod_i [(1 - p_{10})(1 - \theta_i) + p_{01}\theta_i]$$

As discussed above, $p_{10}$ is the probability that a measurement of an empty physical cell results in a detection (the probability of a false detection) and $p_{01}$ is the probability that a measurement of an occupied physical cell results in no detection (the probability of a missed detection). Further in this equation, $(\theta_1)$ is the probability that the $i$th physical cell is occupied. For each measurement, we get a $Pd$. For a set of measurements, the probability, given the current level of occupancies that our model says we get these measurements is the product of the Pd which is the quality metric (QM). The QM is used for validation of sensor data. The QM calculation can be written as:

$$QM = P(\{M\}|\theta_t)$$

Where, {M} is a set of measurements and ($\theta_1$) is the probability of occupancy value of the physical cell. QM is the probability that making the set of measurements on the current state of the evidence grid will give the same result as the actual measurements. If the measurements are of random dust particles, as the result of a brown out, this probability will be much lower than if the measurements are of the actual scene. Hence, QM is used as a quality metric. If the value of QM is below some threshold, then the measurements are likely to be invalid and the update of the probabilities skipped. In practice, the quantity QM must be calculated anyway in order to calculate the updates of the probabilities. In method 300, once collected sensor data has been associated with a physical cell a QM of the physical cell is determined (block 310).

If the QM value is below a set threshold for a physical cell, the probability of occupancy of the associated evidence cell is not updated with the sensor data (block 314) and the process continues with gathering sensor data at block (314). If the QM value is above the set threshold at block (312), the sensor data is presumed valid and the probability of occupancy of the related evidence cell is updated (Block 316).

In embodiments, a Bayesian approach is implemented in updating the occupancies of cells based on previously assumed or calculated values (initial values based on a priori data). This update can be written simply as:

$$P(\theta_1|\{M\}) = \frac{P(\{M\}|\theta_1 = 1)\theta_1}{P(\{M\}|\theta_1 = 1)\theta_1 + P(\{M\}|\theta_1 = 0)(1 - \theta_1)}$$

This formula allows for updating the probability of occupancy of an evidence cell based on the values of the probabilities of occupancy of the evidence cells and the set of measurements. The key here is that we need to calculate the probability that we get the set of measurements {M}, given the probabilities associated with the cells ($\theta$).

Once the probability of occupancy of a cell has been updated at block (316), method 300 stores the new probability of occupancy of the evidence cell in the evidence grid 120 (block 120), and then provides the updated evidence grid 120 to a situational awareness system that uses the updated evidence grid 120 to generate navigation information (block 318). The method 300 continues form there to gather sensor information at block (308). The situational awareness system 108 may include a three-dimensional virtual map that is presented to the pilot of a avionic vehicle as discussed above or it may include a system that provides navigation information or navigation control to other types of vehicles. In either case, the situational awareness system 108 uses the update evidence grid 120 in completing its functions.

EXAMPLE EMBODIMENTS

Example 1 includes a method of updating a probabilistic evidence grid used for navigation, the method includes sensing a plurality of defined physical cells with at least one sensor at least one time to gather sensor data regarding the content of the defined physical cells. Each physical cell is associated with an evidence cell in a probabilistic evidence grid that is made up of a plurality of evidence cells. Moreover, each evidence cell in the probabilistic evidence grid contains a probability of occupancy value. It is determined if the gathered sensor data is valid. Probability of occupancy values of evidence cells of the probabilistic evidence grid with associated valid determinations of sensor data are updated. The updated evidence cell probability of occupancy values are then used in a situational awareness system.

Example 2 includes the method of example 1, further comprising setting initial evidence cell probability of occupancy values for each evidence cell of the probabilistic evidence grid based on a priori information.

Example 3 includes the method of any of the Examples 1-2, wherein determining if the gathered data is valid further comprises determining if a probability of detection value associated with the gathered sensor data for a defined physical cell is what is expected in light of the probability of occupancy values of associated evidence cells.

Example 4 includes the method of any of the Examples 1-3, wherein determining if the gathered data is valid further comprises comparing probabilities of detection values associated with gathered sensor data relating to at least one measurement across a set of physical cells.

Example 5 includes the method of any of the Examples 1-4, wherein determining if the gathered data is valid further comprises using a set of measurements to determine a quality metric and comparing the determined quality metric with a predetermined threshold.

Example 6 includes the method of any of the Examples 1-5, further comprising, if the quality metric is below the determined threshold, determining the gathered data is not valid and ignoring the gathered data.

Example 7 includes the method of any of the Examples 1-6, further comprising, if the quality metric is not below the predetermined threshold, determining the gathered data is valid.

Example 8 includes another method of updating a probabilistic evidence grid used for navgation. The method comprises sensing a plurality of defined physical cells with at least one sensor at least one time to gather sensor data regarding the content of the defined physical cells. Each physical cell is associated with an evidence cell in a probabilistic evidence grid that is made up of a plurality of evidence cells. Each evidence cell in the probabilistic evidence grid contains a probability of occupancy value. When a probability of detection value associated with the gathered sensor data for a select physical cell is not what is expected in view of a probability of occupancy value of an associated evidence cell, probabilities of detection values associated with the gathered sensor data relating to at least one measurement across a set of physical cells near the select physical cell are reviewed. If the gathered sensor data relating to the select cell is valid is determined based on the review of the probabilities of detection values associated with the gathered sensor data relating to at least one measurement across a set of physical cells near the select physical cell. A probability of occupancy value of the associated evidence cell of the probabilistic evidence grid is updated when the gathered sensor data relating to the select physical cell is determined valid. The updated evidence cell probability of occupancy values are used in a situational awareness system.

Example 9 includes the method of Example 8, wherein determining if the gathered sensor data relating to the select cell is valid based on the review of the probabilities of detection values associated with the gathered sensor data relating to at least one measurement across a set of physical cells near the select physical cell further comprises, using a set of measurements across the set of physical cells to determine a quality metric and comparing the determined quality metric with a predetermined threshold.

Example 10 includes the method of any of the Examples 8-9, further comprising, if the quality metric is below the predetermined threshold, determining the gathered data is not valid and ignoring the gathered data.

Example 11 includes the method of any of the Examples 8-10, further comprising, if the quality metric is not below the predetermined threshold, determining the gathered data is valid.

Example 12 includes the method of any of the Examples 8-11, further comprising, setting initial evidence cell probability of occupancy values for each evidence cell of the probabilistic evidence grid based on a priori information.

Example 14 includes a situational awareness system for use in a degraded visual environment, the situational awareness system includes at least one sensor configured to sense ranging information, at least one memory, a situational awareness system and at least one controller. The at least one memory is configured to store gathered sensor data from the at least one senor. The at least one memory is further configured to store a probabilistic evidence grid that includes a plurality of evidence cells that contain probability of occupancy values. The situational awareness system is configured to provide navigation information for operation of a vehicle based at least in part on the probabilistic evidence grid. The at least one controller is in communication with the at least one sensor, the at least one memory and the situational awareness system. Based at least in part on operating instructions stored in the at least one memory, the at least one controller is configured to associate physical cells being sensed with the at least one sensor with corresponding evidence cells in the probabilistic evidence grid. The at least one controller is further configured to determine if gathered sensor data for a select physical cell is valid based at least in part on a comparison of a probability of detection value from the sensor data associated with the select physical cell and a probability of occupancy of a corresponding evidence cell in the probabilistic evidence grid stored in the at least one memory and a review of probability of detection values of a set of physical cells that are nearby the select physical cell. Further the at least one controller is configured to update the corresponding evidence cell of the probabilistic evidence grid when the sensor data associated with the select physical cell is determined valid.

Example 15 includes the situational awareness system of Example 14, wherein the at least one controller configured to determine if gathered sensor data for a select physical cell is valid based at least in part on a review of probability of detection values of a set of physical cells further comprises, the at least one controller configured to use a set of measurements to determine a quality metric and the at least one controller further configured to compare the determined quality metric with a predetermined threshold.

Example 16 includes the situational awareness system of any of the claims 14-16, wherein the controller that is configured to determine if gathered sensor data for a select physical cell is valid based at least in part on a review of probability of detection values of a set of physical cells that are nearby the select physical cell further comprises, the at least one controller further configured to determine the gathered data is not valid when the quality metric is one of above a threshold and equal to the predetermined threshold and ignore the gathered data.

Example 17 includes the situational awareness system of any of the claims 14-17, wherein the controller that is configured to determine if gathered sensor data for a select physical cell is valid based at least in part on a review of probability of detection values of a set of physical cells that are nearby the select physical cell further comprises, the at least one controller configured to determine the gather data is valid if the quality metric is below the predetermined threshold.

Example 18 includes the situational awareness system of any of the claims 14-17, wherein the situational awareness system includes a display with a visual aid.

Example 19 includes the situational awareness system of any of the claims 14-18, wherein the at least one sensor includes at least one light detection and ranging sensor.

Example 20 includes the situational awareness system of any of the claims 14-19, further comprising a communication system in communication with the at least one control to receive a priori information the controller is configured to use to store initial probability of occupancy values in the evidence cells of the probabilistic evidence grid.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

**Claims**

1. A method of updating a probabilistic evidence grid (120) used in a situational awareness system (108), the method comprising:

   sensing a plurality of defined physical cells (202) with at least one sensor (110) at least one time to gather sensor data regarding the content of the defined physical cells (202), each physical cell (202) being associated with an evidence cell in a probabilistic evidence grid (120) that is made up of a plurality of evidence cells, each evidence cell in the probabilistic evidence grid containing a probability of occupancy value;
   determining if gathered sensor data is valid;
   updating probability of occupancy values of evidence cells of the probabilistic evidence grid (120) with associated valid determinations of sensor data; and
   using the updated evidence cell probability of occupancy values in a situational awareness system (108).

2. The method of claim 1, further comprising:

   setting initial evidence cell probability of occupancy values for each evidence cell of the probabilistic evidence grid (120) based on a priori information.

3. The method of claim 1, wherein determining if the gathered data is valid further comprises:

   determining if a probability of detection value associated with the gathered sensor data for a defined physical cell (202) is what is expected in light of the probability of occupancy values of associated evidence cells.

4. The method of claim 1, wherein determining if the gathered data is valid further comprises:

   comparing probabilities of detection values associated with gathered sensor data relating to at least one measurement across a set of physical cells (202).

5. The method of claim 4, wherein determining if the gathered data is valid further comprises:

   using a set of measurements to determine a quality metric; and
   comparing the determined quality metric with a predetermined threshold.

6. The method of claim 5, further comprising:

   if the quality metric is below the predetermined threshold, determining the gathered data is not valid; and
   ignoring the gathered data.

7. The method of claim 5, further comprising:

   if the quality metric is not below the predetermined threshold, determining the gathered data is valid.

8. A situational awareness system (108) for use in a degraded visual environment, the situational awareness system (108) comprising:

   at least one sensor (110) configured to sense ranging information;
   at least one memory (104) to store gathered sensor data from the at least one senor (110), the at least one memory (104) further configured to store a probabilistic evidence grid (120) that includes a plurality of evidence cells that contain probability of occupancy values;

a situational awareness system (108) configured to provide information for operation of a vehicle based at least in part on the probabilistic evidence grid (120); and

at least one controller (102) in communication with the at least one sensor (110), the at least one memory (120) and the situational awareness system (108), based at least in part on operating instructions stored in the at least one memory (104) the at least one controller (102) is configured to associate physical cells (202) being sensed with the at least one sensor (110) with corresponding evidence cells in the probabilistic evidence grid (120), the at least one controller (102) further configured to determine if gathered sensor data is valid based at least in part on a comparison of probability of detection values from the sensor data associated with the physical cells (202) and a probability of occupancy of a corresponding evidence cells in the probabilistic evidence grid (120) stored in the at least one memory (104) and a review of probability of detection values of a set of physical cells (202), further the at least one controller (102) is configured to update the corresponding evidence cell of the probabilistic evidence grid (120) when the sensor data associated with the physical cells (202) is determined valid.

9. The situational awareness system of claim 10, wherein the at least one controller (102) configured to determine if gathered sensor data for a select physical cell (202) is valid based at least in part on a review of probability of detection values of a set of physical cells (202) further comprises:

the at one controller configured to compare probabilities of detection values associated with gathered sensor data relating to at least one measurement across the set of physical cells (202).

10. The situational awareness system of claim 14, wherein the at least one controller (102) configured to determine if gathered sensor data for a select physical cell (202) is valid based at least in part on a review of probability of detection values of a set of physical cells (202) further comprises:

the at least one controller (202) configured to use a set of measurements to determine a quality metric; and
the at least one controller (202) further configured to compare the determined quality metric with a predetermined threshold.

100

COMM.
106

MEMORY
104

120

CONTROLLER
102

SITUATIONAL
AWARENESS
SYSTEM
108

SENSOR
110-1

SENSOR
110-2

• • •

SENSOR
110-N

FIG. 1

FIG. 2

EP 3 351 965 A1

```
                                              ╱─ 300
```

GENERATE EVIDENCE
GRID
302

↓

GATHER A PRIOR DATA
FOR EVIDENCE GRID
304

GENERATE NAVIGATION
INFORMATION
318

STORE NEW
PROBABILITY OF
OCCUPANCY IN
EVIDENCE GRID
317

↓

ASSIGN INITIAL
PROBABILITY OF
OCCUPANCY TO EACH
EVIDENCE CELL IN
EVIDENCE GRID
306

DO NOT UPDATE
PROBABILITY OF CELL
314

↓

GATHER SENSOR DATA
308

↑ YES

↓

DETERMINE A QM OF
SENSOR DATA
310

→

QM VALUE
BELOW SET
THRESHOLD
312

NO →

UPDATE PROBABILITY OF OCCUPANCY OF CELL

$$P(\theta_i|\{M\}) = \frac{P(\{M\}|\theta_i = 1)\,\theta_i}{P(\{M\}|\theta_i = 1)\,\theta_i + P(\{M\}|\theta_i = 0)\,(1 - \theta_i)}$$

316

**FIG. 3**

310

PROBABILITY THAT A SINGLE MEASUREMENT
OF SENSOR RESULTS IN DETECTION

$$Pd = 1 - \prod_i [(1 - p_{10})(1 - \theta_i) + p_{01}\,\theta_i]$$

402

DETERMINE QM
$$QM = P(\{M\} \mid \theta_i)$$
404

# FIG. 4

Europäisches
Patentamt

European
Patent Office

Office européen
des brevets

# EUROPEAN SEARCH REPORT

Application Number

EP 17 20 1247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 006113 A1 (VOLKSWAGEN AG [DE]) 10 September 2009 (2009-09-10) * paragraphs [0001], [0006], [0016], [0017], [0027] - [0033], [0039] - [0052] * | 1-10 | INV. G01S17/93 G01S7/48 G01S17/89 G01S7/51 |
| X | DE 10 2015 201747 A1 (CONTINENTAL TEVES AG & CO OHG [DE]; CONTI TEMIC MICROELECTRONIC GMBH []) 4 August 2016 (2016-08-04) * paragraphs [0014], [0018], [0028], [0029], [0059], [0060], [0064]; claims 1,6,7,8,9,12,13,14 * | 1-10 | |
| X | BRYAN CLARKE ET AL: "Sensor modelling for radar-based occupancy mapping", INTELLIGENT ROBOTS AND SYSTEMS (IROS), 2012 IEEE/RSJ INTERNATIONAL CONFERENCE ON, IEEE, 7 October 2012 (2012-10-07), pages 3047-3054, XP032288101, DOI: 10.1109/IROS.2012.6386255 ISBN: 978-1-4673-1737-5 * abstract * * sections I, III, IV, VII * | 1,2,4,5, 7-10 | |
| X | HARAGUCHI K ET AL: "Probabilistic map building considering sensor visibility for mobile robot", INTELLIGENT ROBOTS AND SYSTEMS, 2007. IROS 2007. IEEE/RSJ INTERNATIONAL CONFERENCE ON, IEEE, PISCATAWAY, NJ, USA, 29 October 2007 (2007-10-29), pages 4115-4120, XP031222507, ISBN: 978-1-4244-0911-2 * abstract * * sections I,II, III * | 1,5,8 | |

TECHNICAL FIELDS SEARCHED (IPC)

G01S

-/--

The present search report has been drawn up for all claims

| Place of search | Date of completion of the search | Examiner |
|---|---|---|
| Munich | 15 June 2018 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 17 20 1247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/216377 A1 (SANE HARSHAD S [US] ET AL) 28 July 2016 (2016-07-28)<br>* abstract *<br>----- | 1,8 | |
| | | | **TECHNICAL FIELDS SEARCHED (IPC)** |

The present search report has been drawn up for all claims

| Place of search | Date of completion of the search | Examiner |
|---|---|---|
| Munich | 15 June 2018 | Grübl, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 20 1247

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2018

| Patent document cited in search report | Publication date | Patent family member(s) | | Publication date |
|---|---|---|---|---|
| DE 102009006113 A1 | 10-09-2009 | NONE | | |
| DE 102015201747 A1 | 04-08-2016 | DE 102015201747 A1 | | 04-08-2016 |
| | | DE 112016000567 A5 | | 02-11-2017 |
| | | WO 2016124189 A1 | | 11-08-2016 |
| US 2016216377 A1 | 28-07-2016 | EP 2963446 A1 | | 06-01-2016 |
| | | US 2016216377 A1 | | 28-07-2016 |

EPO FORM P0459

For more details about this annex : see Official Journal of the European Patent Office, No. 12/82